# EUROPÄISCHE PATENTSCHRIFT

(11) **EP 1 075 610 B1**
(45) Veröffentlichungstag und Bekanntmachung des Hinweises auf die Patenterteilung: **23.04.2003**
(21) Anmeldenummer: 99923547.6
(22) Anmeldetag: 06.05.1999
(51) Int. Cl.: F16F 9/53

(54) **VENTIL AUF BASIS ELEKTRORHEOLOGISCHER UND/ODER MAGNETORHEOLOGISCHER FLÜSSIGKEITEN**
VALVE ON THE BASIS OF ELECTRORHEOLOGICAL AND/OR MAGNETORHEOLOGICAL FLUIDS
CLAPET A BASE DE LIQUIDES ELECTRORHEOLOGIQUES ET/OU MAGNETORHEOLOGIQUES

(30) Priorität: 08.05.1998 DE 19820569
(43) Veröffentlichungstag der Anmeldung: 14.02.2001
(73) Patentinhaber: CARL SCHENCK AG, 64293 Darmstadt (DE)
(72) Erfinder: POHL, Andreas, D-64823 Gross-Umstadt (DE); ROSENFELDT, Horst, D-64846 Gross-Zimmern (DE); WENDT, Eckhardt, D-51373 Leverkusen (DE); BÜSING, Klaus, D-51065 Köln (DE)
(74) Vertreter: Behrens, Helmut, Dipl.-Ing.
(86) Internationale Anmeldenummer: EP9903125
(87) Internationale Veröffentlichungsnummer: WO99058874

(56) Entgegenhaltungen:
- EP-A- 0 460 808
- EP-A- 0 898 093
- WO-A-99/27273
- DE-C- 3 808 521
- GB-A- 1 282 568
- GB-A- 2 193 785
- US-A- 2 661 596

## Beschreibung

Ventile für elektrorheologische Flüssigkeiten (wie aus DE-A-3 808 521 bekannt) sind in der Regel aus koaxialen Zylinderelektroden oder aus Anordnungen paralleler Platten aufgebaut, zwischen denen die elektrorheologische Flüssigkeit hindurchströmt. Durch an die Elektroden gelegte elektrische Spannung ist die Viskosität der zwischen den Elektroden befindlichen elektrorheologischen Flüssigkeit und somit der Durchflußwiderstand durch den Ventilspalt steuerbar.

Im Vergleich zu konventionell steuerbaren Ventilen sind elektrorheologische Flüssigkeitsventile einfacher aufgebaut, weil sie keine bewegten mechanischen Teile wie Absperrkörper besitzen. Ein weiterer Vorteil besteht darin, daß elektrische Signale direkt umgesetzt werden können, so daß mit elektrorheologischen Flüssigkeitsventilen schnelle Schaltzeiten realisiert werden können.

Solche Ventile finden insbesondere in aktiven Stoßdämpfern und Dämpfungslagern Anwendung, siehe z. B. US 2,661,596, US 4,880,216, EP 0 673 478 B1. Aktiv bedeutet dabei, daß das Dämpfungsverhalten derartiger Stoßdämpfer und Lager über Bewegungssensoren aufgrund des augenblicklich herrschenden Bewegungszustandes durch Veränderung des zwischen den Kondensatorplatten (Ventilspaltes) erzeugten elektrischen Feldes gesteuert werden kann.

Elektrorheologische Flüssigkeiten bzw. magnetorheologische Flüssigkeiten sind Flüssigkeiten, bei denen die rheologischen Eigenschaften stufenlos über das elektrische bzw. magnetische Feld steuerbar sind. In der Regel handelt es sich bei elektrorheologischen Flüssigkeiten bzw. magnetorheologischen Flüssigkeiten um Suspensionen, d. h. in einem Trägermedium suspendierte Festpartikel, die über das elektrische bzw. magnetische Feld polarisierbar sind. Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shear-Mode (Elektroden verschieben sich relativ zueinander in parallelen Ebenen), dem Flow-Mode (Elektroden sind fest angeordnet, die Flüssigkeit strömt zwischen den Elektroden hindurch) und dem Squeeze-Mode (Elektroden verändern ihren Abstand zueinander). Diese Moden können auch in Kombination auftreten. Näheres hierzu findet sich in dem Buch "Technischer Einsatz neuer Aktoren", Expert-Verlag, Renningen-Meinsheim, 1995, Kapitel 2.3.1 und Bild 3.1.

Aufgabe der vorliegenden Erfindung ist es, ein Ventil zu schaffen, das die Vorteile der Verwendung von elektrorheologischen Flüssigkeiten und/oder magnetorheologischen Flüssigkeiten als hydraulisches Mittel nutzt, vielseitig einsetzbar ist, und mit dem hohe Drücke und Durchflüsse realisiert werden können. Diese Aufgabe wird dadurch gelöst, daß eine der ersten und zweiten Begrenzungsfläche relativ zu und weg von der anderen der ersten und zweiten Begrenzungsfläche bewegbar ausgebildet ist, so daß der Abstand zwischen der ersten und zweiten Begrenzungsfläche veränderbar ist.

Bei dem erfindungsgemäßen Ventil werden zunächst die durch die Begrenzungsflächen gebildeten Kondensatorfelder derart angesteuert, daß eine den Ventilspalt durchströmende elektrorheologische Flüssigkeit in dem Ventilspalt verfestigt wird und den Ventilspalt absperrt. Bei dieser Verfestigung richten sich die Festpartikel zu Ketten aus. Die verfestigten Stellen verhalten sich wie elastische Festkörper. Zur Erhöhung des Sperrdruckes in dem Ventilspalt ist erfindungsgemäß eine Begrenzungsfläche des Ventilspaltes bewegbar ausgebildet. Das Volumen in dem Ventilspalt kann dadurch verkleinert werden, die elektrorheologische Flüssigkeit wird nur zusätzlich in den Squeeze-Mode übergeführt. Zwischen den sich zu Ketten ausgerichteten Festpartikeln wirken nun durch Verschiebung der Begrenzungsfläche elektrostatische Gegenkräfte. Gegenüber dem Flow-Mode kann daher bei einem verfestigten elektrorheologischen Flüssigkeitspfropfen als Absperrung im Flow-Mode und Squeeze-Mode ein mehrfach höherer Druck aufgebaut werden, bevor der Flüssigkeitspfropfen aufgrund des Druckes weitergeschoben wird.

Nachfolgend werden Ausführungsbeispiele der Erfindung näher erläutert, die in den Zeichnungen dargestellt sind. Es zeigt:
Fig. 1: ein elektrorheologisches Ventil mit rechteckigem Querschnitt in Schnittdarstellung;
Fig. 2a: ein zylidrisch ausgebildetes elektrorheologisches Ventil im Längsschnitt;
Fig. 2b: das Ventil gemäß Fig. 2a im Querschnitt;
Fig. 3: ein weiteres Ausführungsbeispiel eines elektrorheologischen Ventils mit scheibenförmigen Elementen in Schnittdarstellung;
Fig. 4: in Schnittdarstellung ein Stoßdämpfer mit dem elektrorheologischen Ventil gemäß Fig. 3;
Fig. 5: eine Ansteuerung eines Gleichlaufzylinders;
Fig. 6: eine Ansteuerung eines Differentialzylinders;
Fig. 7: eine Ansicht eines Ventilgrundkörpers eines elektrorheologischen Ventils;
Fig. 8: ein weiterer Ventilgrundkörper.

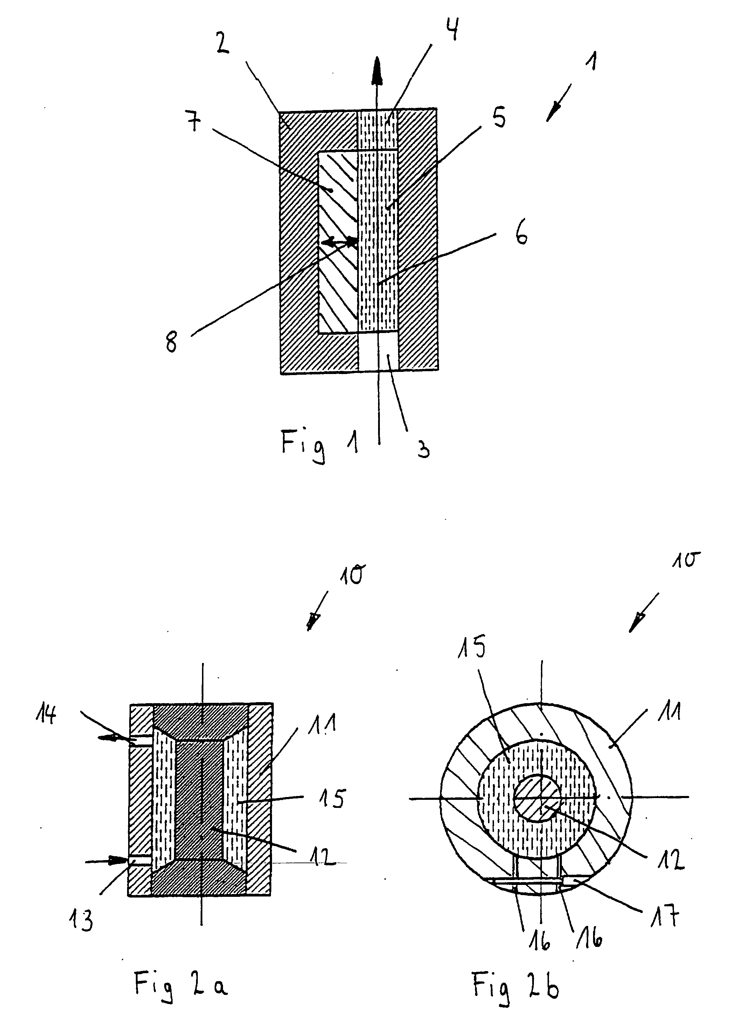

Fig. 1 zeigt ein in Schnittdarstellung abgebildetes elektrorheologisches Ventil 1, das aus einem Ventilgehäuse 2 besteht, das einen Fluideinlaß- 3 und einen Fluidauslaßkanal 4 aufweist.

Der Ventilspalt 5, zwischen dem die elektrorheologische Flüssigkeit vom Fluideinlaßkanal 3 zum Fluidauslaßkanal 4 hindurchströmt, wird durch zwei parallel beabstandet angeordnete Kondensatorfelder begrenzt. Die Kondensatorfelder werden zum einen durch das Ventilgehäuse 2, welcher über elektrische Leitungen mit einer regelbaren Hochspannungsquelle verbunden ist, und zum anderen durch einen in dem Ventilgehäuse 2 quer zur Durchströmungsrichtung (dargestellt durch Pfeil 6) der elektrorheologischen Flüssigkeit durch den Ventilspalt 5 beweglich gelagerten plattenförmigen Aktor 7 gebildet, der über eine isoliert aus dem Ventilgehäuse 2 herausgeführte Leitung an Erdpotential gelegt. Auf eine Darstellung der elektrischen Leitungen sowie der Ansteuerung usw. wurde verzichtet. Die Bewegungsrichtung des Aktors 7 ist durch den Pfeil 8 angedeutet, wobei der Aktor 7 nach dem piezoelektrischen, magnetischen, hydraulischen oder magnetostriktiven Prinzip angesteuert werden kann. Die Ansteuerung ist in der Zeichnung nicht näher dargestellt.

Bei dem erfindungsgemäßen Ventil 1 werden zunächst die durch den Aktor 7 und das Ventilgehäuse 2 gebildeten Kondensatorfelder derart angesteuert, daß ein in Richtung des Pfeils 6 von dem Fluideinlaßkanal 3 zum Fluidauslaßkanal 4 durch den Ventilspalt 5 strömende elektrorheologische Flüssigkeit (Flow-Mode) in dem Ventilspalt 5 verfestigt wird und den Ventilspalt 5 absperrt. Zur Erhöhung des Sperrdruckes in dem Ventilspalt 5 ist der Aktor 7 in Richtung des Pfeils 8 beweglich ausgebildet. Das Volumen in dem Ventilspalt 5 kann dadurch verkleinert werden, die elektrorheologische Flüssigkeit wird nun zusätzlich in den Squeeze-Mode übergeführt. Vorzugsweise kann über den Aktor 7 eine Schwingbewegung eingeleitet werden.

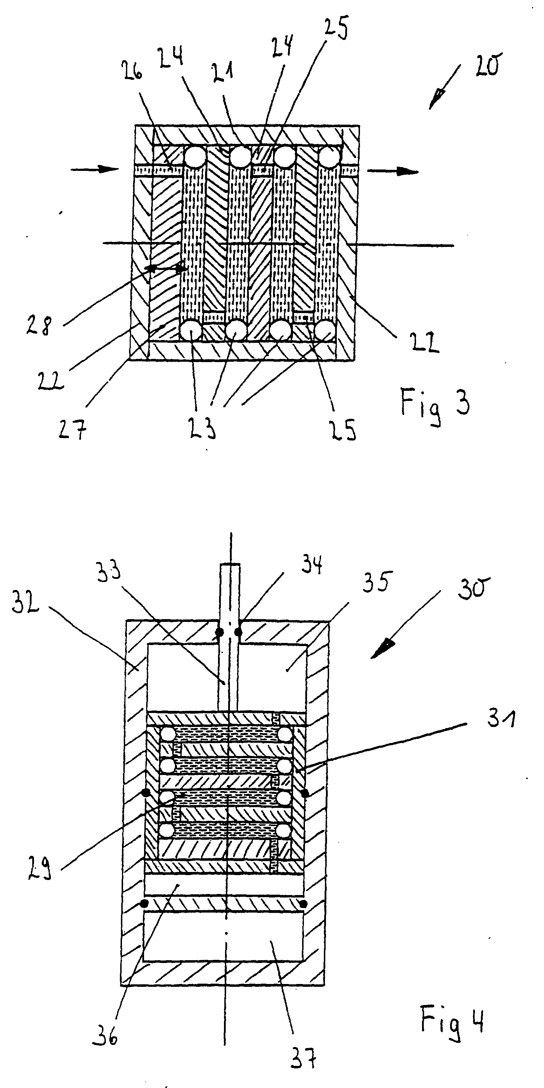

In den Figuren 2a und 2b ist eine weitere Ausgestaltung eines erfindungsgemäßen Ventils 10 im Längs- bzw. Querschnitt dargestellt. Das Ventil 10 besteht aus einem hohlzylindrisch ausgebildeten Ventilgehäuse 11, in das koaxial ein zylindrisches Element 12 aufgenommen ist. Das Ventilgehäuse 11 weist einen

Fluideinlaßkanal 13 und einen in Längsrichtung beabstandet angeordneten Fluidauslaßkanal 14 auf. Der Ventilspalt 15, zwischen dem die elektrorheologische Flüssigkeit vom Fluideinlaßkanal 13 zum Fluidauslaßkanal 14 hindurchströmt, wird durch zwei ringförmig beabstandet angeordnete Kondensatorfelder begrenzt. Die Kondensatorfelder werden zum einen durch das Ventilgehäuse 11, welches an Erdpotential gelegt ist, und zum anderen durch das zylindrische Element 12 gebildet, das über eine elektrische Leitung mit einer regelbaren Hochspannungsquelle verbunden ist. Das Ventilgehäuse 11 ist mit mindestens einem Längsschlitz 16 ausgebildet, der das ringförmigen Ventilgehäuse 11 durchtrennt.

Über einen nur schematisch dargestellten Aktor 17, der ebenfalls nach dem piezoelektrischen, magnetischen, hydraulischen oder magnetostriktiven Prinzip angesteuert werden kann, kann das geschlitzt ausgebildete ringförmige Ventilgehäuse 11 aufgedehnt bzw. verengt werden, so daß eine Volumenverkleinerung des Ventilspaltes 15 eingeleitet werden kann.

Das in Fig. 3 in Schnittdarstellung gezeigte Ventil 20 besteht aus einem hohlzylindrischen Ventilgehäuse 21 mit zwei scheibenförmigen Deckelteilen 22. In dem Ventilgehäuse 21 sind über elastische ringförmige Zwischenelemente 23 mehrere scheibenförmige Elemente 24 parallel beabstandet angeordnet. Die scheibenförmigen Elemente 24 weisen jeweils eine zylindrische Fluiddurchlaßöffnung 25, 25' auf und sind derart hintereinandergeschaltet angeordnet, daß die Fluiddurchlaßöffnungen 25, 25' der aufeinanderfolgenden scheibenförmigen Elemente 24 jeweils um 180° versetzt angeordnet sind. Die ringförmigen Zwischenelemente 23 weisen beispielsweise einen ausgehend von einer Fluiddurchlaßöffnung 25 mäanderförmig zu einer Fluiddurchlaßöffnung 25' sich ersreckenden Kanal auf. Der Kanal kann auch spiralförmig ausgebildet sein. Ein weiteres mit einer Fluiddurchlaßöffnung 26 versehenes scheibenförmiges Element 27 ist als Aktor ausgebildet und kann nach dem piezoelektrischen, magnetischen, hydraulischen oder magnetostriktiven Prinzip beweglich längs des Pfeils 28 angesteuert werden.

Eine elektrorheologische Flüssigkeit, die durch den Ventilspalt 29 der durch die mit Fluiddurchlaßöffnungen versehenen, beabstandet angeordneten scheibenförmigen Elementen strömt, kann durch Ansteuerung der Kondensatorfelder zunächst im Flow-Mode verfestigt werden. Die Kondensatorfelder werden jeweils durch zwei parallel beabstandet angeordnete scheibenförmige Elemente 24 gebildet, die abwechselnd an Erdpotential gelegt sind bzw. mit einer regelbaren Hochspannungsquelle verbunden sind. Die Zwischenelemente 23 wirken isolierend. Zu Erhöhung des Sperrdruckes in dem Ventilspalt 29 wird nun der Aktor 27 derart angesteuert, daß sich der Abstand der scheibenförmigen Elemente 24 zueinander verringert. Die elektrorheologische Flüssigkeit wird nun zusätzlich in den Squeeze-Mode überführt.

In Fig. 4 ist schematisch ein Stoßdämpfer 30 in Schnittdarstellung gezeigt, wobei das in Fig. 3 beschriebene Ventil 20 den Kolben 31 des Stoßdämpfers 30 bildet. Der Stoßdämpfer 30 besteht aus einem zylindrischen Gehäuse 32 mit einem axial verschiebbaren Kolben 31, der mit einer Kolbenstange 33 verbunden ist und über eine Durchtrittsöffnung 34 aus dem Gehäuse 32 herausgeführt ist. Der Kolben 31 trennt die beiden Kammern 35 und 36, die mit einer elektrorheologische Flüssigkeit gefüllt sind. Weiterhin ist eine Gasdruckkammer 37 vorgesehen, die u. a. dem Ausgleich des Kolbenstangenvolumens und den thermischen Volumenschwankungen der elektrorheologischen Flüssigkeit dient. Die Kammern 35 und 36 stehen über den Ventilspalt 29 in Verbindung.

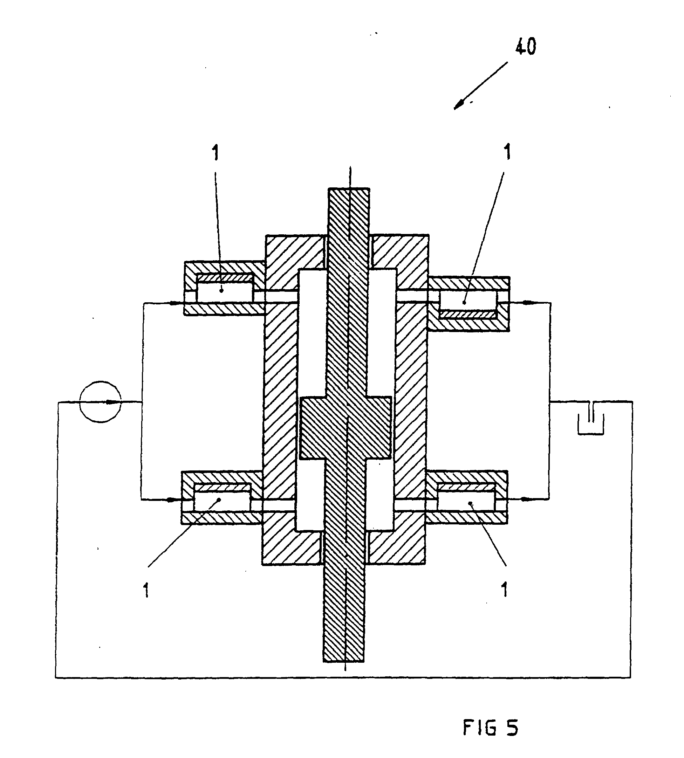

In Fig. 5 ist eine Zylindersteuerung an einem Gleichlaufzylinder 40 schematisch dargestellt. Die Ventile an den Fluidein- und Fluidauslaßöffnungen der Fluidkammern sind als elektrorheologische Ventile 1 gemäß der Beschreibung zu Fig. 1, Fig. 2a, Fig. 2b oder Fig. 3 ausgebildet.

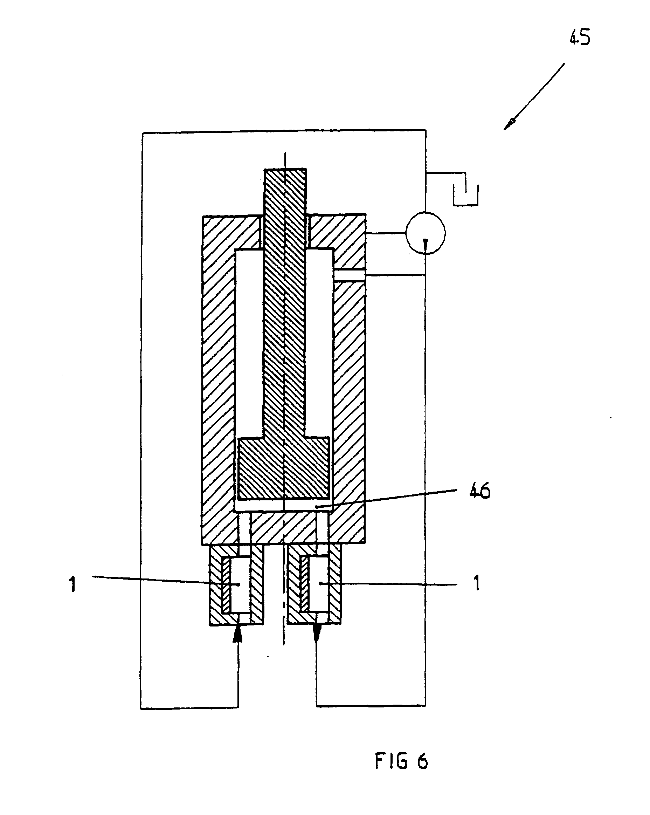

In Fig. 6 ist eine Zylindersteuerung an einem Differentialzylinder 45 schematisch dargestellt. Die Ventile an der Fluideinund Fluidauslaßöffnung der Fluidkammer 46 sind als elektrorheologische Ventile 1 gemäß der Beschreibung zu Fig. 1, Fig. 2a, Fig. 2b oder Fig. 3 ausgebildet.

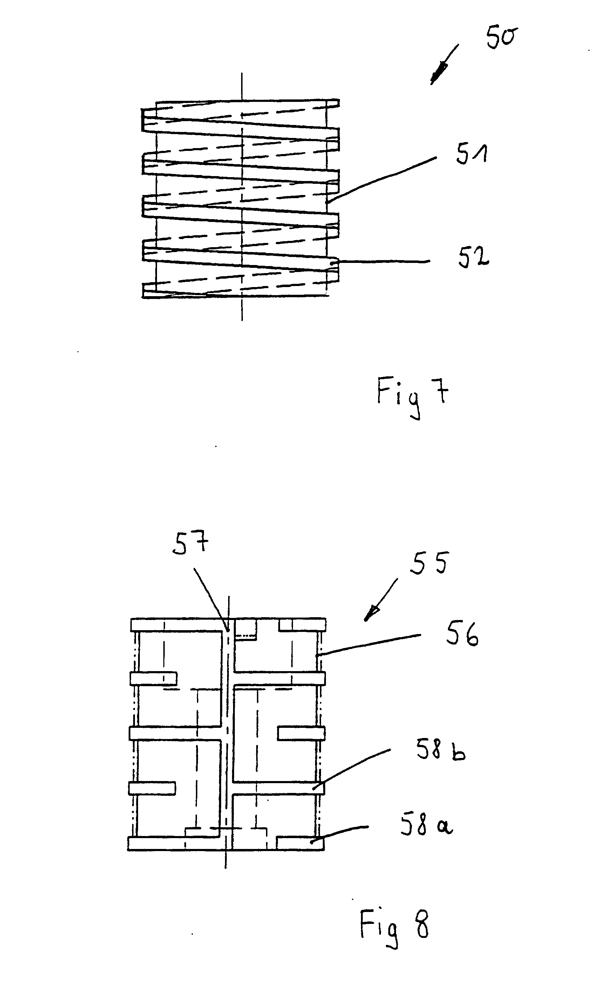

In Fig. 7 ist in Ansicht ein zylindrischer Ventilgrundkörper 50 dargestellt, der in ein hohlzylindrisches Ventilgehäuse eingesetzt werden kann. Auf der Mantelfläche 51 des zylindrischen Ventilgrundkörpers 50 ist ein im Querschnitt rundes oder rechteckiges streifenförmiges Element 52 aus einem Isolationswerkstoff derart aufgesetzt, daß der Ventilgrundkörper 50 von dem streifenförmigen Element 52 wendelförmig ummantelt wird. Wird nun der mit dem streifenförmigen Element 52 versehene Ventilgrundkörper 50 in ein Ventilgehäuse eingesetzt, so entsteht ein Ventil mit einem von einer Fluideinlaßöffnung zu einer Fluidauslaßöffnung verlaufenden wendelförmigen Ventilspalt.

Das Ventilgehäuse wird beispielsweise an Erdpotential gelegt, der zylindrische Ventilgrundkörper wird dann über elektrische Leitungen mit einer regelbaren Hochspannungsquelle verbunden. Eine durch den Ventilspalt strömende elektrorheologische Flüssigkeit kann somit durch entsprechende Ansteuerung des Kondensatorfeldes verfestigt werden.

In Fig. 8 ist ein weiteres Ausführungsbeispiel eines zylindrischen Ventilgrundkörpers 55 abgebildet. Auf der Mantelfläche 56 des Ventilgrundkörpers ist ein in Längsrichtung verlaufendes streifenförmiges Element 57 aufgesetzt. Ausgehend von diesem streifenförmigen Element 57 sind in Querrichtung hierzu parallel beabstandet weitere streifenförmige Elemente 58a, 58b angeordnet, die abwechselnd ausgehend von einer ersten Seite des streifenförmigen Elementes 57 auf den Ventilgrundkörper 55 an der Mantelfläche aufgesetzt sind, jedoch zu der zweiten Seite des streifenförmigen Elementes 57 beabstandet enden. Ein in Längsrichtung darauffolgendes parallel angeordnetes weiteres streifenförmiges Element 58b ist ausgehend von der zweiten Seite des streifenförmigen Elementes 57 auf die Mantelfläche aufgesetzt und endet beabstandet zu der ersten Seite des streifenförmigen Elementes 57 usw. Die streifenförmigen Elemente 57, 58a, 58b sind aus einem Isolationswerkstoff ausgebildet. Wird nun ein derartiger, mit streifenförmigen Elementen versehener Ventilgrundkörper 55 in ein hohlzylindrisches Gehäuse eingebracht, so entsteht ein Ventil mit einem von einem Fluideinlaßkanal zu einem Fluidauslaßkanal verlaufender mäanderförmigen Ventilspalt.

Gemäß einer bevorzugten nicht dargestellten Weiterbildung ist vorgesehen, daß die Ventilgrundkörper gemäß der Fig. 7 und Fig. 8 längs geschlitzt ausgebildet sein können. Über einen Aktor, der nach dem piezoelektrischen, magnetischen, hydraulischen oder magnetostriktiven Prinzip angesteuert werden kann, kann der geschlitzt ausgebildete Ventilgrundkörper dann aufgedehnt bzw. verengt werden, so daß eine Volumenveränderung des Ventilspaltes eingeleitet werden kann.

Die Ventilgrundkörper gemäß der Figuren 7 und 8 können ebenfalls, wie es bereits in Fig. 4 beschrieben ist, in einem Stoßdämpfer eingesetzt werden.

Anstelle der Verwendung einer elektrorheologischen Flüssigkeit kann auch eine magnetorheologische Flüssigkeit oder ein Gemisch beider Flüssigkeiten eingesetzt werden. Bei der Verwendung von magnetorheologischen Flüssigkeiten werden anstelle der Kondensatorplattenelemente elektrisch ansteuerbare Spulenanordnungen vorgesehen.

## Patentansprüche

1. Ventil auf Basis elektrorheologischer und/oder magnetorheologischer Flüssigkeiten enthaltend einen Fluideinlaßkanal, der durch einen Ventilspalt mit einem Fluidauslaßkanal verbunden ist, wobei der Ventilspalt mit einer elektrorheologischen und/oder magnetorheologischen Flüssigkeit gefüllt ist und der Ventilspalt durch erste und zweite Begrenzungsflächen gebildet wird, die als elektrisch ansteuerbare Kondensatorfelder und/oder Spulenanordnungen ausgebildet sind, wobei deren Feldbeaufschlagung auf die den Ventilspalt durchströmende Flüssigkeit wirkt, **dadurch gekennzeichnet, daß** eine der ersten und zweiten Begrenzungsfläche relativ zu und weg von der anderen der ersten und zweiten Begrenzungsfläche bewegbar ausgebildet ist, so daß der Abstand zwischen der ersten und zweiten Begrenzungsfläche veränderbar ist.

2. Ventil nach Patentanspruch 1, **dadurch gekennzeichnet, daß** in einem Ventilgehäuse (2) ein im Querschnitt rechteckiger Ventilspalt (5) gebildet wird, wobei das Ventilgehäuse (2) die erste Begrenzungsfläche des Ventilspaltes (5) bildet, und ein in dem Ventilgehäuse (2) angeordneter plattenförmiger Aktor (7) die zweite Begrenzungsfläche bildet, und der plattenförmige Aktor (7) quer zur Durchströmungsrichtung (6) des Ventilspaltes (5) beweglich gelagert ist.

3. Ventil nach Patentanspruch 1, **dadurch gekennzeichnet, daß** das Ventilgehäuse (11) hohlzylindrisch und längsgeschlitzt ausgebildet ist und die erste Begrenzungsfläche des Ventilspaltes bildet und in dem Ventilgehäuse (11) ein zylindrisches Element (12) angeordnet ist, welches die zweite Begrenzungsfläche des Ventilspaltes bildet und an dem Ventilgehäuse (11) ein Aktor (17) angeordnet ist, der das Ventilgehäuse (11) aufdehnen bzw. verengen kann, so daß sich die erste und zweite Begrenzungsfläche aufeinander zu und voneinander weg bewegen.

4. Ventil nach Patentanspruch 1, **dadurch gekennzeichnet, daß** in einem hohlzylindrischen Ventilgehäuse (21) beabstandet scheibenförmige mit Fluiddurchlaßöffnungen (25) versehene Elemente (24) angeordnet sind, wobei durch benachbarte scheibenförmige Elemente die erste und zweite Begrenzungsfläche des Ventilspaltes gebildet wird, und wobei die Fluiddurchlaßöffnungen (25) von benachbarten Elementen (24) jeweils um 180° versetzt angeordnet sind und ein scheibenförmiges Element (24) als Aktor (27) ausgebildet ist und auf die weiteren scheibenförmigen Elemente derart einwirkt, daß sich der Abstand der durch die scheibenförmigen Elemente gebildeten ersten und zweiten Begrenzungsflächen verändert.

5. Ventil nach Patentanspruch 4, **dadurch gekennzeichnet, daß** die scheibenförmigen Elemente (24) durch elastische ringförmige Zwischenelemente (23) parallel beabstandet im Ventilgehäuse (21) angeordnet sind.

6. Ventil nach einem oder mehreren der vorhergehenden Ansprüche, **dadurch gekennzeichnet, daß** das Ventil (1, 10, 20) zur Verwendung in einem Stoßdämpfer (30) vorgesehen ist.

7. Ventil nach einem oder mehreren der vorhergehenden Patentansprüche, **dadurch gekennzeichnet, daß** das Ventil (1, 10, 20) zur Verwendung in einer Ansteuerung von Zylindern (40, 45) vorgesehen ist.

## Claims

1. A valve based upon electro-rheological and/or magneto-rheological fluids, comprising a fluid inlet channel which is connected to a fluid outlet channel by a valve gap, wherein the valve gap is filled with an electro-rheological and/or a magneto-rheological fluid and the valve gap is formed by first and second boundary surfaces which are in the form of electrically controllable capacitor fields and/or coil assemblies, and wherein the fields thereof are effective on the fluid flowing through the valve gap, **characterised in that** one of the first and second boundary surfaces is moveable relative to and away from the other one of the first and second boundary surfaces so that the spacing between the first and second boundary surfaces is variable.

2. A valve in accordance with Claim 1, **characterised in that** a valve gap (5) of rectangular cross-section is formed in a valve housing (2), wherein the valve housing (2) forms the first boundary surface of the valve gap (5), and a plate-like actuator (7) disposed in the valve housing (2) forms the second boundary surface, and **in that** the plate-like actuator (7) is mounted in moveable manner transversely relative to the direction of flow (6) through the valve gap (5).

3. A valve in accordance with Claim 1, **characterised in that** the valve housing (11) is in the form of a hollow cylinder incorporating a longitudinal slit and forms the first boundary surface of the valve gap and a cylindrical element (12) forming the second boundary surface of the valve gap is arranged in the valve housing (11), and **in that** an actuator (17) is arranged on the valve housing (11), said actuator (17) being adapted to expand or contract the valve housing (11) so that the first and second boundary surfaces move towards one another and away from one another.

4. A valve in accordance with Claim 1, **characterised in that** spaced disc-shaped elements (24) incorporating fluid passage openings (25) are arranged in a hollow cylindrical valve housing (21), wherein the first and second boundary surfaces of the valve gap are formed by adjacent disc-shaped elements, and wherein the fluid passage openings (25) of adjacent elements (24) are respectively displaced by 180°, and **in that** a disc-shaped element (24) serves as an actuator (27) and acts on the further disc-shaped elements in such a manner that the spacing between the first and second boundary surfaces formed by the disc-shaped elements alters.

5. A valve in accordance with Claim 4, **characterised in that** the disc-shaped elements (24) are arranged spaced in parallel in the valve housing (21) by means of resilient ring-shaped intermediate elements (23).

6. A valve in accordance with any one or more of the preceding Claims, **characterised in that** the valve (1, 10, 20) is provided for use in a shock absorber (30).

7. A valve in accordance with any one or more of the preceding Claims, **characterised in that** the valve (1, 10, 20) is provided for use in a control system for cylinders (40, 45).

## Revendications

1. Vanne à base de liquides électrorhéologiques et/ou magnétorhéologiques contenant un canal d'entrée de fluide qui est relié par un passage à travers la vanne à un canal de sortie de fluide, le passage à travers la vanne étant rempli d'un liquide électrorhéologique et/ou magnétorhéologique, et le passage à travers la vanne étant formé par des premières et des deuxièmes surfaces de délimitation qui sont conformées sous forme de champs de condensateur, à commande électrique et/ou d'agencements de bobines, l'action de leur champ s'exerçant sur le liquide circulant dans le passage à travers la vanne, **caractérisée en ce que** l'une des premières et deuxièmes surfaces de délimitation est réalisée déplaçable vers et éloignée de l'autre des premières et deuxièmes surfaces de délimitation, de telle sorte que la distance entre la première et la deuxième surface de délimitation est variable.

2. Vanne selon la revendication 1, **caractérisée en ce que** dans un boîtier de vanne (2) est formé un passage à travers la vanne (5) de section rectangulaire, le boîtier (2) de la vanne formant la première surface de délimitation du passage à travers la vanne (5), et un actionneur (7) en forme de plaque, disposé dans le boîtier (2) de la vanne, formant la deuxième surface de délimitation, et l'actionneur (7) en forme de plaque est monté déplaçable transversalement à la direction d'écoulement (6) du passage à travers la vanne (5).

3. Vanne selon la revendication 1, **caractérisée en ce que** le boîtier (11) de la vanne est cylindrique creux et fendu longitudinalement, et forme la première surface de délimitation du passage à travers la vanne, et dans le boîtier (11) de la vanne est disposé un élément cylindrique (12) qui forme la deuxième surface de délimitation du passage à travers la vanne, et, sur le boîtier (11) de la vanne, est disposé un actionneur (17) qui peut dilater ou rétrécir le boîtier (11) de la vanne, de sorte que la première et la deuxième surface de délimitation se déplacent l'une vers l'autre et s'écartent l'une de l'autre.

4. Vanne selon la revendication 1, **caractérisée en ce que**, dans un boîtier (21) cylindrique creux de la vanne, sont disposés des éléments (24) espacés, en forme de disques, pourvus d'orifices (25) de passage de fluide, des éléments en forme de disque voisins formant la première et la deuxième surface de délimitation du passage à travers la vanne, et les orifices (25) de passage du fluide d'éléments (24) voisins étant disposés décalés respectivement de 180°, et un élément (24) en forme de disque étant conformé sous forme d'actionneur (27) et agissant sur les autres éléments en forme de disque, de sorte que la distance des premières et deuxièmes surfaces de délimitation, formées par les éléments en forme de disque, varie.

5. Vanne selon la revendication 4, **caractérisée en ce que** les éléments (24) en forme de disque sont disposés dans le boîtier (21) de la vanne, espacés parallèlement, au moyen d'éléments intermédiaires (23) élastiques de forme annulaire.

6. Vanne selon une ou plusieurs des revendications précédentes, **caractérisée en ce que** la vanne (1, 10, 20) est prévue pour être utilisée dans un amortisseur (30).

7. Vanne selon une ou plusieurs des revendications précédentes, **caractérisée en ce que** la vanne (1, 10, 20) est prévue pour être utilisée dans une commande de vérins (40, 45).
